# EUROPÄISCHE PATENTSCHRIFT

(11) **EP 1 413 808 B1**
(45) Veröffentlichungstag und Bekanntmachung des Hinweises auf die Patenterteilung: **27.12.2006**
(21) Anmeldenummer: 03405771.1
(22) Anmeldetag: 27.10.2003
(51) Int. Cl.: F16K 1/50

(54) **Führungsvorrichtung, Ventileinsatz und Spindelventil**
Guiding device, valve cartridge and spindle valve
Dispositif de guidage, cartouche de soupape et soupape à tige

(30) Priorität: 25.10.2002 CH 17972002; 19.11.2002 CH 19332002; 19.11.2002 CH 19342002
(43) Veröffentlichungstag der Anmeldung: 28.04.2004
(73) Patentinhaber: R. Nussbaum AG, 4601 Olten (CH)
(72) Erfinder: Bobst, Urs, 4703 Kestenholz (CH); Roethlisberger, Peter, 4538 Oberbipp (CH); Tobler, Hans, 4632 Trimbach (CH)
(74) Vertreter: Roshardt, Werner Alfred

(56) Entgegenhaltungen:
- DE-A- 3 812 233
- GB-A- 459 915
- GB-A- 847 828
- NL-C- 9 472
- US-A- 5 060 909

## Beschreibung

### Technisches Gebiet

Die Erfindung betrifft eine Führungsvorrichtung für eine verdrehgesicherte Längsführung mit einem in einem rohrartigen Innenraum eines Aussenteils, in dessen Längsrichtung geführt, bewegbaren stabförmigen Teil, der mantelseitig einen durch einen Durchbruch eines Dichtelements fluiddicht geführten zylindrischen Abschnitt hat, wobei ein erster Innenwandbereich des Innenraums einen Führungsabschnitt aufweist und ein zweiter Innenwandbereich einen Aufnahmeraum für das Dichtelement bildet. Ferner betrifft die Erfindung einen Ventileinsatz für eine Armatur, welche eine in Längsrichtung verschiebbare Spindeleinheit und ein Aussenteil hat. Des Weiteren betrifft die Erfindung ein Spindelventil als Armatur mit einem einen Fluideinlass und einen Fluidauslass aufweisenden Gehäuse.

### Stand der Technik

In der US 5,060,909 wird ein Absperrventil für Fluide beschrieben, welches eine verdrehsichere Längsführung eines Kolbenträgers in einem Innenraum eines Aussenteils umfasst, wobei die verdrehsichere Längsführung bei Erreichen einer gewissen Hubbegrenzung ähnlich einer "Rutschkupplung" den Übergang der axialen Bewegung in eine Rotationsbewegung zulässt.

Die Verdrehsicherung wird hierbei durch eine relativ komplizierte Ausgestaltung nachgiebiger Vorsprünge am Kolbenträger erreicht, wobei die Führung des Kolbenträgers nicht fluiddicht gegenüber dem Innenraum des Aussenteils erfolgt.

Aus der NL 9472 ist eine Führungsvorrichtung in einem Niederschraubventil offenbart, die eine verdrehgesicherte und fluiddichte Längsführung eines stabförmigen Teils im Innenraum eines Aussenteils erlaubt. Die Verdrehsicherung wird durch einen am stabförmigen Teil mantelseitig ausgebildeten nockenförmigen Teil erreicht, der in einer axialen Aussparung im Innenraum des Aussenteils gleitet.

Beide Führungsvorrichtungen weisen hierbei bei einem grossen Bauvolumen einen geringen Hub des axial geführten bewegbaren Teils auf.

### Darstellung der Erfindung

Aufgabe der Erfindung ist es, eine Führungsvorrichtung, einen Ventilsatz sowie ein Spindelventil mit einem minimalen Platzbedarf zu schaffen

Die Lösung der Aufgabe erfolgt durch die Merkmale der Patentansprüche 1, 8 und 12. Bevorzugte Aufgaben und Ausführungen werden durch die abhängigen Patentansprüche gelöst.

Führungsvorrichtungen für eine verdrehgesicherte fluiddichte Längsführung waren voluminös.

Zur Volumenverkleinerung ist nun erfindungsgemäss eine Kombinationsgeometrie mit einem zylindrischen Stababschnitt und einem Mehrkantstababschnitt auf ein- und demselben in Längsrichtung bewegbaren Element gewählt worden.

Die Erfindung ist eine Führungsvorrichtung für eine verdrehgesicherte, fluiddichte Längsführung gemäß Anspruch 1.

Hierdurch ist eine Kombination zwischen einer Verdrehsicherung, wie sie beispielsweise für das halbsteigende Prinzip einer Ventileinheit oder eines Spindelventils benötigt wird, und einer sich gut abdichten lassenden zylindrischen Bohrung, welche zudem eine gute Führung aufweist, gefunden worden. Die Führungseinheit lässt sich überall dort einsetzen, wo eine Platz sparende Lösung für eine verdrehgesicherte, in Längsrichtung verschiebbare "Wellendichtung" gefunden werden muss.

Das stabförmige Teil hat, wie bereits ausgeführt, neben einem zylindrischen Stababschnitt einen Mehrkantstababschnitt. Die Fluidabdichtung wird am zylindrischen Stababschnitt vorgenommen, wobei der Abdichtungsort frei wählbar ist. Bevorzugt, aufgrund einer einfachen Konstruktion, wird man jedoch den Abdichtort derart wählen, dass das Dichtelement eine an einem Ende des Führungsabschnitts angeordnete Ringdichtung als sogenannte Spindelabdichtung zur fluiddichten Abdichtung des zylindrischen Stababschnitts ist. Da die Ringdichtung nicht bewegt wird, d.h. ortsfest angeordnet ist, können auch vom Ring abweichende Geometrien verwendet werden. Die Ringgeometrie ist jedoch eine äusserst preisgünstige und stabile Geometrie. Als Materialien für die Dichtelemente wird man vorzugsweise EPDM oder NBR verwenden.

Die "Ringdichtung" kann an jedem Ort entlang des zylindrischen Stababschnittes angeordnet werden. Der Weg zwischen einem Ende des zylindrischen Stababschnitts und dem Ort der Ringdichtung ergibt den zur Verfügung stehenden Führungsweg. Wird die Ringdichtung jedoch vorzugsweise in einem Aufnahmeraum am Ende des Führungsabschnitts untergebracht so ergibt sich ein maximaler Führungsweg; zudem kann mit dieser Ausführung ein Totraum zwischen einem Verschlusselement und der Ringdichtung vermieden werden. Auch kann hierdurch bei einem Einsatz in einem Ventileinsatz das Verschlusselement rückdichtend auf die Ringdichtung wirken.

Der Aufnahmeraum wird in seinen Abmessungen um eine Einpresstoleranz bzw. "Dichttoleranz" kleiner ausgebildet als die Ringdichtung, damit sich die Ringdichtung nach dem Einpressen fluiddicht an den zylindrischen Stababschnitt anschmiegt.

Das Ende des Führungsabschnitts hat eine radial nach aussen verlaufende Anlagefläche für die Ringdichtung und an der gegenüberliegenden Seite einen koaxialen Halteansatz. Der Halteansatz ist so schmal gewählt, dass die Ringdichtung mit einer Einpresskraft darüber schiebbar ist, aber dennoch so breit, dass die Ringdichtung aufgrund ihrer elastischen Kraft nicht über den Halteansatz gedrückt wird. Der Halteansatz wird vorzugsweise mit einem Einstichwerkzeug ausgefräst; er könnte jedoch in einer aufwändigeren Ausgestaltung auch als Ringscheibe aufgeschraubt werden.

Vorzugsweise wird der Mehrkantstababschnitt als regelmässiger Mehrkantstababschnitt ausgebildet; was jedoch nicht zwingend ist. Ein regelmässiger Mehrkantstababschnitt ist leichter herzustellen und sieht besser aus. Wird ein regelmässiger Mehrkantstababschnitt gewählt, so wählt man den Durchmesser des zylindrischen Querschnitts kleiner als einen Radius R eines den Querschnitt des Mehrkantstababschnitts umhüllenden Kreises und grösser als R · cos (180°/n), wobei n die Anzahl Ecken der Mehrkantform ist. Hierdurch ist gewährleistet, dass sich sowohl die Zylinderform und die Mehrkantform in einer Überlagerung gut, mit einem vertretbaren Spiel führen lassen.

Das stabförmige Teil kann eine koaxial verlaufende Innengewindebohrung haben, in die ein Gewindeelement zur Längsverschiebung eingreifen kann. Das stabförmige Teil ist somit gleichzeitig ein Element einer Längsverschiebeeinrichtung. Selbstverständlich können auch andere Verschiebekonstruktionen gewählt werden: Es könnte z. B. ein Linearantrieb mit einer Schubstange angreifen.

Die oben beschriebene Führungseinheit kann in einen Ventileinsatz z. B. für Armaturen integriert werden, wobei dann neben der als "Wellendichtung" wirkenden "Ringdichtung" ein Verschlusselement vorhanden ist. Das Verschlusselement ist vorzugsweise an einem Ende des stabförmigen Teils angeordnet. Das stabförmige Teil wird in diesem Fall oftmals auch als Spindeleinheit bezeichnet. Das Verschlusselement ist mit der Längsbewegung der Spindeleinheit zu einem Fluiddurchlass ein- und ausfahrbar bis dieser teilweise oder ganz verschlossen oder auch offen ist. Der Ventileinsatz kann sämtliche oben angeführten Ausführungsvarianten der Führungseinheit aufweisen.

Der Ventileinsatz kann auch als Baugruppe eines Spindelventils (z.B. Niederschraubventil) dienen, wodurch dessen Ausführung dann eine kompakte, servicefreundliche und preisgünstige Einheit ergibt. Das Gehäuse des Spindelventils hat dann wenigstens einen Fluidein- und wenigstens einen Fluidauslass.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung der Ausführungsbeispiele verwendeten Zeichnungen zeigen:
- Fig. 1: einen Längsschnitt durch ein Aussenteil der erfindungsgemässen Führungsvorrichtung,
- Fig. 2: eine Draufsicht auf das in **Figur 1** dargestellte Aussenteil in der dortigen Blickrichtung II,
- Fig. 3: eine Seitenansicht eines stabförmigen Teils der erfindungsgemässen Führungsvorrichtung ohne Ringdichtung,
- Fig. 4: einen Längsschnitt durch das in **Figur 3** dargestellte Teil mit einer Ringdichtung,
- Fig. 5: eine Draufsicht (in vergrössertem Massstab) auf den stabförmigen Teil in der in **Figur 3** gezeigten Blickrichtung V,
- Fig. 6: ein Spindelventil mit einem Ventileinsatz, der die in den **Figuren 1** bis **5** dargestellten Elemente enthält,
- Fig. 7: einen Längsschnitt durch ein Handrad (Drehgriff) als Variante zu der in **Figur 6** gezeigten Handradanordnung,
- Fig. 8: eine Ansicht von unten gegen das in **Figur 7** dargestellte Handrad,
- Fig. 9: eine Draufsicht auf das in **Figur 7** dargestellte Handrad,.
- Fig. 10: eine schematische Darstellung von auf einem Antriebselement einer Ausführungsvariante zur Führungseinrichtung angeordneten Gewindeabschnitten und
- Fig. 11: schematisch die Wirkungsweise des in **Figur 10** skizzierten Antriebselements zusammen mit einer Halteeinheit (Einsatzbüchse) und einer Spindeleinheit.

Grundsätzlich sind in den Figuren gleiche Teile und Elemente mit gleichen Bezugszeichen versehen.

### Wege zur Ausführung der Erfindung

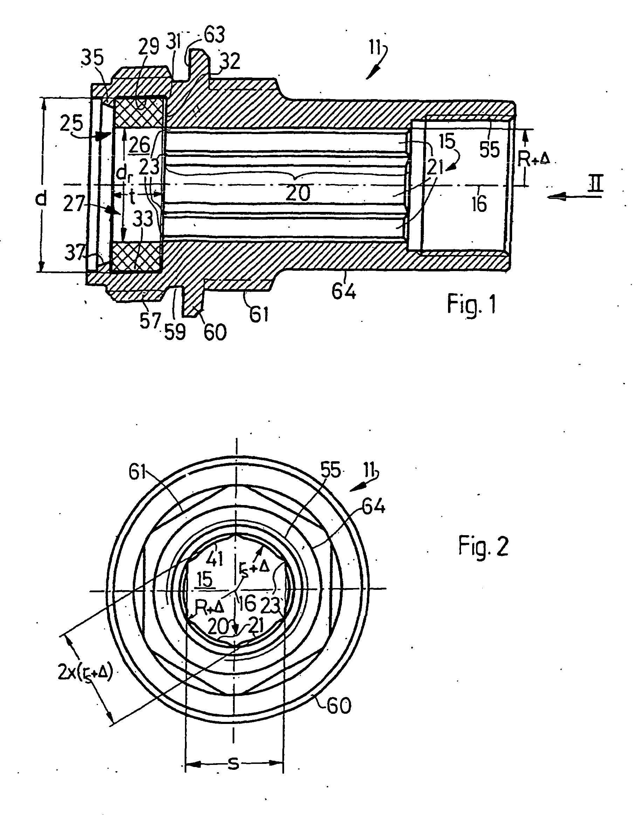

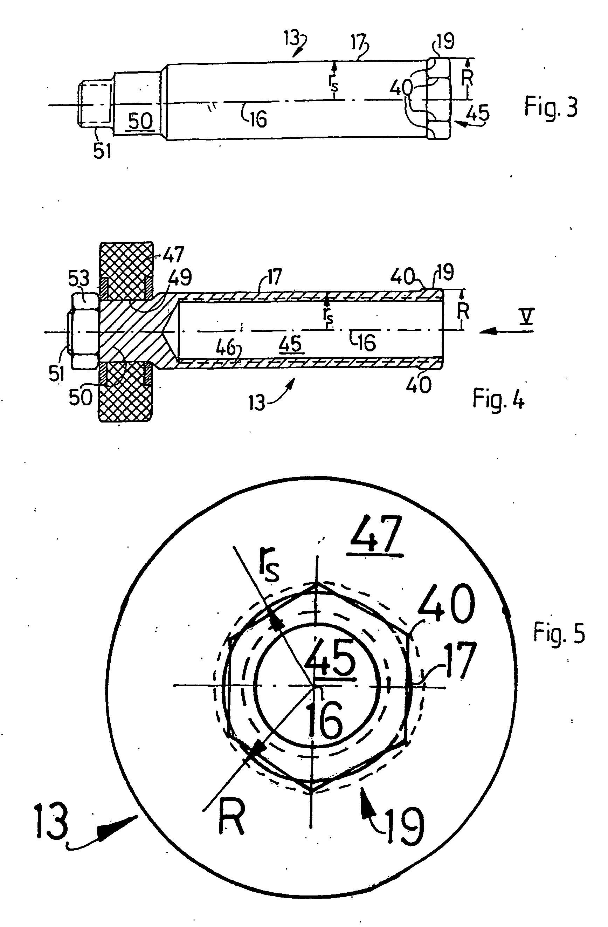

Die erfindungsgemässe Führungsvorrichtung hat ein in den **Figuren 1** und **2** dargestelltes Aussenteil **11** und ein in den **Figuren 3** und **4** dargestelltes stabförmiges Teil **13,** das auch als sogenannte Spindeleinheit dienen kann. Das Teil **13** ist, wie unten beschrieben, verdrehgesichert und fluiddicht in einem rohrartigen Innenraum **15** des Aussenteils **11** geführt. Die Bewegung des Teils **13** erfolgt in Längsrichtung des Aussenteils **11,** also parallel zu dessen Längsachse **16.** Das stabförmige Teil **13** hat mantelseitig sowohl einen zylindrischen Stababschnitt **17** wie auch einen Mehrkantstababschnitt **19**. Ein erster Innenwandbereich des Innenraums **15** des Aussenteils **11** weist einen Führungsabschnitt **20** auf, der einen einem zylindrischen Formteil **21** entsprechenden wie auch einem Mehrkantformteil **23** entsprechenden überlagerten Formteil hat. Das Aussenteil **11** der Führungsvorrichtung hat ferner ein Dichtelement **25** mit einem Durchbruch **26** als sogenannte Ringdichtung sowie einen zweiten, einen Aufnahmeraum **27** für das Dichtelement **25** bildender Innenwandbereich **29.** Der zylindrischen Stababschnitt **17** des stabförmigen Teils **13** ist fluiddicht durch den Durchbruch **26** verschiebbar.

Der Aufnahmeraum **27** für das Dichtelement **25** ist an einem Ende **31** des Führungsabschnitts **20** angeordnet. Der Aufnahmeraum **27** hat hier beispielsweise am Ende **31** des Führungsabschnitts **20** eine radial nach aussen, senkrecht zur Längsachse **16** des Aussenteils **11** verlaufende Anlagefläche **32** für das Dichtelement **25.** Das Dichtelement ist hier als Ringdichtung **25** gewählt, welche einen Kreiszylinder mit einem zylindrischen Aussenmantel **33** und einem zentrischen zylindrischen Durchbruch **26** aufweist. An dem der Anlagefläche **32** gegenüberliegenden Ende hat der Aufnahmeraum **27** einen umlaufenden koaxialen Halteansatz **35**, der eine nach aussen sich erweiternde umlaufende Einlaufschräge **37** aufweist. Durch diese Einlaufschräge **37** soll ein Einpressen der Ringdichtung **25** in den Aufnahmeraum **27** erleichtert werden. Die Tiefe **t** des Aufnahmeraums **27** sowie dessen Durchmesser **dₐ** sind derart gewählt, dass sie um eine Einpresstoleranz kleiner sind als die entsprechenden Abmessungen der Ringdichtung **25.** Der Innendurchmesser **dᵣ** des Durchbruchs **26** ist derart gewählt, dass sich der Mehrkantstababschnitt **19** des stabförmigen Teils **13** bei noch nicht in den Aufnahmeraum **27** eingebrachter Ringdichtung **25** gut durchschieben lässt und im in dem Aufnahmeraum **27** eingebrachten Zustand der Ringdichtung **25** eine gute Fluidabdichtung bei einer möglichen Längsverschiebung des stabförmigen Teils **13** gegenüber dessen zylindrischen Stababschnitt **17** gegeben ist.

Der Mehrkantstababschnitt **19** ist hier beispielsweise als regelmässiger Sechskantabschnitt mit den Massen einer Sechskantmutter ausgebildet ist. Gemäss der Norm z.B. DIN 934 entspricht dann dem Eckenabstand e₁ der Mutterecken der Sechskantmutter zweimal dem Radius **R**. Das Mass **s** der DIN 934 ist zur Orientierung in **Figur 2** eingetragen. Der Mehrkantstababschnitt **19** könnte jedoch auch als ein unregelmässiger Mehrkantstababschnitt ausgebildet sein, falls eine vorgegebene Einbaustellung des stabförmigen Teils im Führungsabschnitt **20** gefordert würde. Als regelmässige Mehrkantstababschnitte können in Variation zu dem hier gewählten sechseckigen, auch drei-, vier- , fünfeckige und höhereckige gewählt werden. Eine allzu hohe Anzahl von Ecken ist jedoch nicht von Vorteil, da sich hierdurch eine immer stärkere Annäherung des die äusseren Ecken **40** umschliessenden Umhüllungskreises mit dem Radius **R** an einen Innenkreis ergibt, der die Seiten des Vielecks als Tangente hat. Hierdurch geht die Führungseigenschaft des Führungsabschnittes **20** allmählich verloren.

Vorteilhaft wählt man einen Radius **rₛ** des Querschnitts des zylindrischen Stababschnitts **17** kleiner als einen Radius **R** eines den Querschnitt des Mehrkantstababschnitts **19** umhüllenden Kreises **39** und grösser als R · cos (180°/n), wobei n die Anzahl Ecken **40** der Mehrkantform ist.

Der Führungsabschnitt **20** ist derart passend zum stabförmigen Teil **13** ausgebildet, dass sich dieses mit einer Spielpassung einschieben lässt und der stabförmige Teil **13** gegen Verdrehen gesichert geführt ist. Der Querschnitt des Führungsabschnitts **20** wird somit mit einer Innenbohrung **41** hergestellt, welche einen Radius rₛ + Δ hat, wobei Δ die Spieltoleranz ist. In die Wand der Innenbohrung **41** werden der Lage der Ecken **40** entsprechend Nuten **43** mit einer Räumnadel eingebracht. Diese Nuten **43** haben einen Abstand R + Δ von der Achse **16** des Aussenteils **11**.

Das stabförmige Teil **13** kann mit einer koaxial verlaufenden Innengewindebohrung **45** ausgerüstet werden, in die ein unten erwähntes Antriebselement **74** mit einem Aussengewindeabschnitt **75** in einem Innengewinde **46** in der Innenbohrung **45** zur Längsverschiebung eingreifen kann.

Die oben beschriebene Führungsvorrichtung kann überall dort eingesetzt werden, wo vereinfacht ausgedrückt, eine Wellendichtung benötigt wird, bei der ein Verdrehen der "Welle" nicht gestattet ist. Nachfolgend wird hierzu als Beispiel ein Ventileinsatz mit der obigen Führungsvorrichtung beschrieben.

Ein in einem Ventileinsatz zu verwendender stabförmiger Teil **13** als Spindeleinheit weist zusätzlich ein Verschlusselement **47** auf, welches aufgrund der Bewegung der Spindeleinheit **13** parallel zur Spindellängsachse **16** einen Fluiddurchlass wenigsten teilweise verschliesst bzw. wenigstens teilweise öffnet. Ein beispielsweiser Fluiddurchlass ist in dem nachfolgenden Beispiel eines Spindelventils (Niederschraubventil) **67** beschrieben. Das in **Figur 4** dargestellte Verschlusselement **47** ist entsprechend der Kontur eines zu verschliessenden Fluiddurchlasses kreiszylindrisch mit einem abgedichteten Durchbruch **49** ausgebildet. Das Verschlusselement **47** muss nicht kreiszylindrisch sein; es kann je nach verwendetem Fluiddurchlass auch eine andere Form haben.

Das Verschlusselement **47** sitzt auf einem im Querschnitt kreiszylindrischen Stutzen **50,** der in einen Gewindezapfen **51** übergeht, auf dem eine Anpressmutter **53** zur Befestigung des Verschlusselements **47** sitzt.

Wird die den zylindrischen Stababschnitt **17** gegen den Innenwandbereich **29** des Aussenteils **11** abdichtende Ringdichtung **25**, wie oben beschrieben, im Aufnahmeraum **27** angeordnet, so ergibt sich im vollständig geöffneten Zustand des Ventileinsatzes eine gegenüber dem Fluid totraumfreier Zustand, da das Verschlusselement **47** an der Ringdichtung **25** anliegt. Zusätzlich wirkt das Verschlusselement **47** rückdichtend und verleiht der Spindelabdichtung einen zusätzlichen Schutz vor Ablagerungen und Verschmutzung.

Das Aussenteil **11** hat ein in **Figur 1** dargestelltes Innengewinde **55** als Halteelement. Das stabförmige Teil **13** als Spindeleinheit weist die oben angeführte koaxial verlaufende Innengewindebohrung **45** auf, in die ein ein Aussengewinde tragendes, im Halteelement gehaltenes Antriebselement **74** als Gewindeelement zur Längsverschiebung eingreift. Ein derartiges beispielsweises Antriebselement **74** wird im unten beschriebenen Spindelventil **67** verwendet. Vorzugsweise ist das Antriebselement **74** dann im Halteelement **79** im Aussenteil **11** über ein Gewinde gehalten, damit bei einer Drehbewegung des Antriebselements **74** eine der doppelten Gewindesteigung entsprechende Längsbewegung erzeugbar ist.

Vorzugsweise wird man am Aussenteil **11** an dessen Aussenseite im Bereich des die Ringdichtung aufweisenden Endbereichs ein Aussengewinde **57** anbringen, um den Ventileinsatz in eine Gehäuseöffnung **70** als Einsetzöffnung einschrauben zu können. Auf das Aussengewinde **57** folgt ein radialer Einstich **59**, in den ein O-Ring **73** zur Abdichtung des Aussengewindes **57** in der Gehäuseöffnung **70** einlegbar ist. Der Einstich **59** geht in einen überstehenden Ring **60** über, auf dem ein Mutternsechskant **61** angeformt ist. Der Übergang des Einstichs **59** zum Ring **60** erfolgt über eine senkrecht zur Längsachse verlaufende Ringfläche **63**, welche beim Einschrauben in die Gehäuseöffnung **70** als Anschlag dient. Am Muttersechskant **61** lässt sich ein entsprechender Schlüssel zum Einschrauben des Ventileinsatzes **69** bzw. des Aussenteils **11** in eine entsprechende Gewindebohrung (z.B. eine unten beschriebene Gehäuseöffnung **70**) ansetzen. Ein verbleibender Aussenmantelbereich **64** des Aussenteils **11** ist zylindrisch ausgebildet.

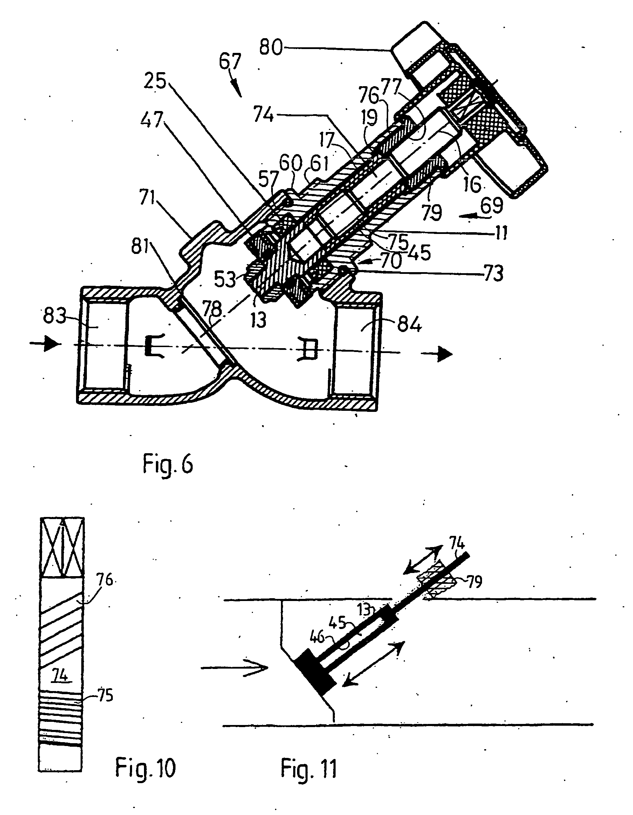

Das in **Figur 6** dargestellte Spindelventil **67** weist neben nachfolgend beschriebenen Elementen, den bereits oben angeführten Ventileinsatz **69** mit der ebenfalls oben aufgeführten Führungsvorrichtung auf.

Die Führungsvorrichtung hat auch hier das Aussenteil **11** und das stabförmige Teil **13** als Spindeleinheit mit dem Verschlusselement **47** und der Innenbohrung **45.** Die Spindeleinheit **13** ist mit einer Ringdichtung **25** als Spindeldichtung gegenüber dem Innenraum **15** des Aussenteils **11** abgedichtet. Das Aussenteil **11** ist mit seinem Aussengewinde **57** in einer ein Innengewinde aufweisenden Gehäuseöffnung **70** eines Gehäuses **71** als Armatur eingeschraubt und mit einem O-Ring **73** abgedichtet.

In die Innenbohrung **45** ist ein Antriebselement **74** (Antriebsspindel) eingeschraubt. Das Antriebselement **74** hat zwei voneinander distanzierte Aussengewinde **75** und **76**, wobei das eine Gewinde **75** mit dem Innengewinde **46** in der Innenbohrung **45** der Spindeleinheit **13** und das andere Gewinde **76** mit dem Innengewinde **77** einer Einsatzbüchse **79** "kämmt". Die Einsatzbüchse **79** weist ein Aussengewinde auf, welches in das Innengewinde **55** des Aussenteils **11** eingeschraubt ist. Das Antriebselement **74** überragt das Aussenteil **11** und hat an einem überragenden Teil ein Handrad **80** (Drehgriff) zum Verdrehen des Antriebselements **74.** Durch diese Verdrehung wird die Spindeleinheit **13** in der oben beschriebenen Führungsvorrichtung in Längsrichtung verschoben. Durch die Verbindung über zwei Gewinde **45** und **75** sowie **45** und **77** ergibt sich ein Hub, der einer doppelten Gewindesteigung entspricht.

In **Figur 6** ist das Spindelventil **67** in seiner vollständig geöffneten Position dargestellt. In dieser Stellung liegt das Verschlusselement **47** auf der Ringdichtung **25** totraumfrei auf.

Durch eine Rotation des Handrades **80** kann das Verschlusselement **47** in das Gehäuse **71** eingeschraubt werden bis sein Rand einen im Gehäuse **71** angeordneten Fluiddurchlass **81** verschliesst. Der Fluiddurchlass **81** ist mit einem Fluideinlass **83** und einem Fluidauslass **84** verbunden. Das Verschlusselement **47** ist gegenüber dem Fluiddurchlass **81** derart angeordnet, dass die Achse **78** des Fluiddurchlasses **81** und die Längsachse **16** des Ventileinsatzes miteinander fluchten.

Das Dichtelement **25** muss nicht als Ringdichtung ausgebildet sein; es kann eine beliebige Form (Formdichtung z.B. Doppellippendichtung) haben. Der Aufnahmeraum **27** muss dann allerdings entsprechend angepasst werden. Die Anlagefläche **32** für das Dichtelement **25** muss nicht als plane Fläche ausgebildet sein; sie kann eine beliebige Oberflächenkontur aufweisen. Bevorzugt wird man dann die Oberflächenkontur des Dichtelements entsprechend ausbilden. Hierdurch kann ein formschlüssiger Sitz des Dichtelements erreicht werden. Eine Ringdichtung ist jedoch gegenüber der gerade genannten Ausbildung bedeutend preisgünstiger.

Das Innengewinde **55** am Ende des Aussenteils **11** dient als Halteelement zusammen mit einer Einsatzbüchse **77** zur Halterung des Antriebselements **74**. Anstelle miteinander wirkender Gewinde können auch andere Verbindungselemente wie beispieslweise ein Bajonettverschluss oder eine eingepresste Büchse verwendet werden.

In **Figur 6** sind die miteinander kämmenden Gewinde **75** und **46** sowie **76** und **77** derart ausgebildet, dass sich ein Hub mit der doppelten Gewindesteigung ergibt. Das Antriebselement **74** weist zwei voneinander distanzierte Aussengewinde **75** und **76** auf. Im Gegensatz zur obigen Ausführung können nun diese Aussengewinde **75** und **76** gegenseitig umlaufend ausgebildet werden. Es kann z.B. das obere Aussengewinde **76** (zusammen mit dem Innengewinde **77**) als ein rechtsgängiges (bzw. rechtsdrehendes) Gewinde und das untere Aussengewinde **75** (zusammen mit der Gewindeinnenbohrung **46** der Spindeleinheit **13**) als ein linksgängiges (bzw. linksdrehendes) Gewinde ausgebildet sein. Beide Gewinde **76/77** und **75/46** können mit unterschiedlicher Steigung ausgebildet werden, wobei beispielsweise die Steigung der oberen Gewinde **76/77** geringer als die Steigung der unteren Gewinde **75/46** gewählt wird. Die Anzahl der Umläufe soll bei beiden Gewinden **76/77** und **75/46** gleich sein.

Das Handrad **80** wird zum Öffnen des Spindelventils im Uhrzeigersinn gedreht. Durch die feste Verbindung des Handrads **80** mit dem oberen Ende des Antriebselements **74** wird dieses gleichsinnig mitgedreht. Das obere Gewinde **76/77** ist rechtsgängig ausgebildet, weshalb das Antriebselement **74** entsprechend der Anzahl Umdrehungen des Handrads **80** aus dem Ventileinsatz **69** "emporsteigt". Während dem Betätigen des Handrads **80** spürt der Benutzer, dass sich das Handrad **80** anhebt. Das Öffnen des Spindelventils ist dadurch nicht nur visuell, sondern auch durch die in axialer Richtung ausgeführte Bewegung des Handrads **80** feststellbar.

Gleichzeitig wirkt das Antriebselement **74** mit den unteren Gewinde **75/46** auf die Spindeleinheit **13.** Diese Gewinde **75/46** sind gegensinnig umlaufend zu den Gewinden **76/77** ausgebildet. Durch das sich drehende Antriebselement **74** dringt dieses in die Spindeleinheit **13** ein. Zwar haben die Gewinde **75/46** und **76/77** die gleiche Anzahl an Umdrehungen, aber das untere Gewinde **74/46** soll eine grössere Steigung als die oberen Gewinde **76/77** aufweisen. Das Steigungsverhältnis von oberen zu unteren Gewinden **76/77** zu **74/46** soll beispielsweise 1 : 1,5 betragen. Steigt nun das Antriebselement beim Betätigen des Handrads **80** um 1 cm empor, so bewegt sich die Spindeleinheit **13** 1,5 cm nach unten.

In den **Figuren 10 und 11** ist die oben beschriebene teleskopartige Verschiebung schematisch verdeutlicht.

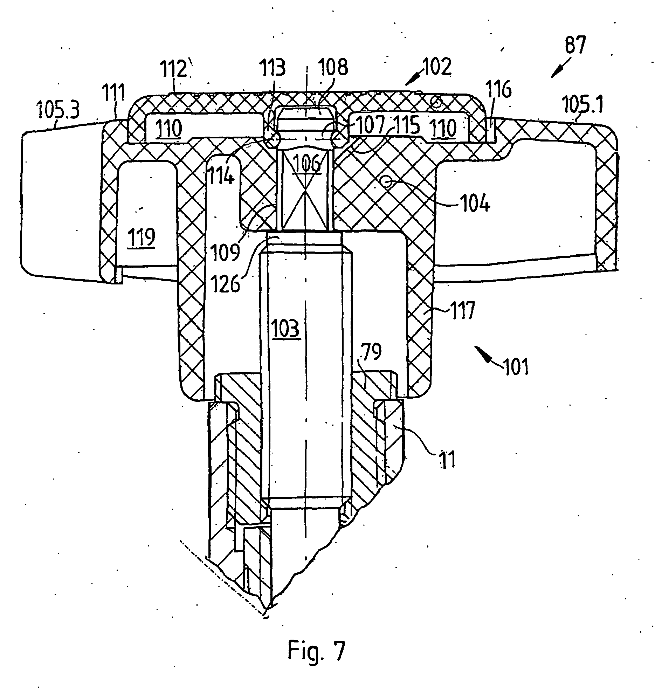

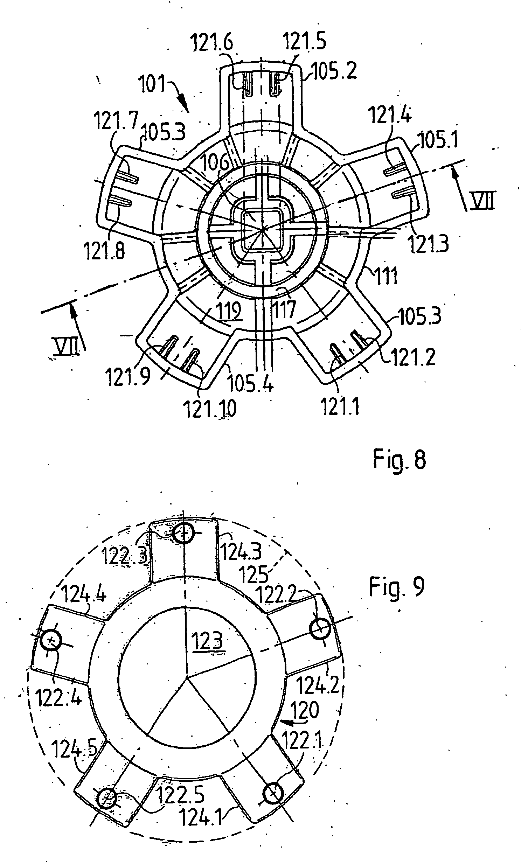

**Figur 7** zeigt einen Längsschnitt durch eine Ausführungsvariante eines Drehgriffs **87** zum Drehgriff **80.** Der Drehgriff **87** hat einen Drehgriff-Körper **101**, welcher auf einem zum Antriebselement **74** analogen Antriebselement **103** eines zum Gehäuse **71** analog ausgebildeten Gehäuses verdrehsicher aufgesetzt ist. Auf der Oberseite (Sichtseite) des Drehgriff-Körpers **101** ist ein Tellerelement **102** eingesetzt. Der Drehgriff-Körper **101** ist z.B. ein Kunststoff-Spritzgussteil mit einem mehr oder weniger zylindrischen Zentralteil **104** und mit einer Mehrzahl (z.B. fünf) von Armen **105.1** bis **105.5** (vgl. auch **Figur 8**). Der Drehgriff-Körper **101** ist innen hohl. Im Zentrum hat er einen Durchgangskanal **109** für das Antriebselement **103.**

Das Antriebselement **103** ist aus Metall und hat einen Vierkant-Abschnitt **106**, welcher mit dem Durchgangskanal **109** zusammenwirkt, so dass der Drehgriff-Körper **101** verdrehfest auf dem Antriebselement **103** sitzt. Vorzugsweise bildet der Durchgangskanal **109** ebenfalls einen Vierkant-Querschnitt. Oben am Vierkant-Abschnitt **106** hat das Antriebselement **103** eine umlaufende Nut **107**. Das obere Ende des Antriebselements **103** wird durch einen Kopf **108** gebildet.

Auf der Oberseite hat der Drehgriff-Körper **101** eine flächige Vertiefung **110** zur Aufnahme des Tellerelements **102.** Die Vertiefung **110** erstreckt sich im Wesentlichen über den gesamten zylindrischen Zentralteil **104** bis zum Randteil **111** desselben. Der Randteil **111** ist eine peripher angeordnete Wandung.

Das Tellerelement **102** ist im Wesentlichen eine kreisförmige Scheibe mit einem nach unten abgewinkelten Rand (Ringwand **112**). Im Zentrum des Tellerelements **102** ist - ebenfalls an der Unterseite - ein Ringelement **113** angeformt. Dieses nimmt den Kopf **108** auf und greift mit einem zur Zentralachse (= Achse des Antriebselements) vorstehenden Schulterteil **114** in einer Nut **107** des Antriebselements **103** ein. Die Form der Nut **107** ist vorzugsweise bogenartig und angepasst an den Schulterteil **114**. Am oberen Ende ist der Kopf **108** randseitig abgeschrägt. Die Abschrägung bildet einen rampenartigen Übergang zwischen einem Durchmesser, nicht grösser als der durch den Schulterteil **114** definierte freie Innendurchmesser ist, und dem maximalen Aussendurchmesser des Kopfs **108**. Das Tellerelement **102** kann infolgedessen mit dem Ringelement **113** auf den Kopf **108** aufgesetzt und durch Druck über diesen geschoben werden, bis der Schulterteil **114** in der Nut **107** einschnappt.

Am oberen Ende des Durchgangskanals **109** ist eine Abschrägung **115** ausgebildet. Im vorliegenden Beispiel hat sie eine Neigung von ca. 45° zur Längsachse des Durchgangskanals **109.** Die Abschrägung ist so bemessen und platziert, dass sie mit dem Ringelement **113** zusammenwirken kann, um den Drehgriff-Körper **101** auf der Achse des Antriebselements **103** axial zu fixieren.

Am unteren Ende des Vierkant-Abschnitts **106** verbreitert sich das Antriebselement **103** über den freien Querschnitt des Durchgangskanals **109** hinaus (vgl. Schulter **126**), so dass der Drehgriff-Körper **101** in eine definierte axiale Position auf dem Antriebselement **103** sitzt. Die Abschrägung **115** befindet sich dann im Bereich des oberen Endes des Vierkant-Abschnitts **106** bzw. im Bereich der Nut **107**. Wenn nun der Schulterteil **114** rastend in der Nut **107** sitzt, dann drückt die Aussenseite des Ringelements 113 auf die Abschrägung **115** und hält den Drehgriff-Körper **101** in der gewünschten axialen Position unverrückbar fest ("Verkeilung").

Damit das Tellerelement **102** bei Bedarf wieder ausgewechselt werden kann (z.B. wenn bei der Montage aus Versehen die falsche Kennzeichnung angebracht worden ist), ist an der Innenseite des umlaufenden Randteils **111** an einer beliebigen Stelle eine Eingriffsöffnung **116** vorgesehen. Es handelt sich um eine Art Ausbuchtung der Vertiefung **110**. Sie befindet sich am Übergang (d.h. am Schlitz) zwischen dem Randteil **111** und dem Tellerelement **102**, derart dass z.B. mit einem Schraubenzieher oder einem anderen geeigneten Werkzeug (ev. auch mit einem für diesen Zweck speziell ausgebildeten Hilfsmittel) das Tellerelement **102** aus dem Eingriff mit dem Antriebselement **103** herausgelöst werden kann.

Der Drehgriff-Körper **101** hat eine rohrförmige Sichtabdeckung **117**, welche den aus dem Gehäuse **71** herausragenden Teil des Antriebselements **103** abdeckt. Zwischen der Sichtabdeckung **117** und dem Randteil **111** wird ein nach unten offener Freiraum **119** gebildet.

Das Tellerelement **102** kann z.B. für eine leicht erkennbare Kennzeichnung einer Armatur verwendet werden. Insbesondere kann mit einer Farbe das Medium (Warmwasser/Kaltwasser etc.) angezeigt werden. Das Tellerelement **102** kann aber auch als Hinweis auf den Hersteller der Armatur dienen (z.B. durch eine Beschriftung und/oder ein Bild und/oder eine Farbe). Wichtig ist, dass das Tellerelement **102** nur einen oberflächlichen Bereich bzw. ein Einsetzelement bildet und nicht das Handrad **80** (Handgriff) als Ganzes. Das Tellerelement **102** braucht also keine Drehmomente (wie sie zum Betätigen der Armatur benötigt werden) aufzunehmen bzw. zu übertragen. Selbstverständlich kann im Sinn einer Option eine Drehmomentübertragung vorgesehen werden.

Mit dem auswechselbaren Tellerelement **102** kann die Logistik für eine Vielzahl von Armaturen einfacher und effizienter gestaltet werden. Es müssen nicht Handräder **80** (Drehgriffe) mit unterschiedlicher Kennzeichnung produziert, gelagert und ausgeliefert werden. Vielmehr kann ein einheitlicher Handrad-Typ mit einer Befestigungsvorrichtung produziert und an Lager genommen werden, der bei der Auslieferung bzw. bei der Montage mit dem richtigen (d.h. mit der im Einzelfall gewünschten) Tellerelement **102** mit der geeigneten Kennzeichnung versehen wird.

Das Tellerelement **102** braucht nicht eine bestimmte Form der Oberseite (= Sichtseite) zu haben. Es soll einfach eine Sichtseite besitzen, die genügend gross für eine gut sichtbare bzw. lesbare Markierung ist. Es kommt in der Regel auch nicht darauf an, dass das Tellerelement **102** dünn ist. Es ist eine Frage der Art der Schnappbefestigung, wie das Tellerelement **102** am Rand oder an der Unterseite (d.h. derjenigen Seite, welche der Sichtseite diametral gegenüber liegt) ausgestaltet ist. Wünschenswert ist eine einfache Aussenform, damit das Tellerelement **102** möglichst kostengünstig hergestellt und möglichst problemlos montiert werden kann.

**Figur 8** zeigt eine Unteransicht des Drehgriff-Körpers **101**. Es sind die fünf Arme **105.1** bis **105.5** erkennbar, die in regelmässiger Anordnung an der Peripherie des Drehgriffs verteilt sind. Weiter ist erkennbar, dass im Sinn einer bevorzugten Ausführungsform der Randteil **111** im Durchmesser mehr als halb so gross ist, wie der Durchmesser des Hüllkreises **125** der Arme **105.1** bis **105.5.** Die Arme **105.1** bis **105.5** sind also im Verhältnis zur Gesamtabmessung des Drehgriffs relativ kurz und breit.

Weiter ist der Freiraum **119** zu erkennen, der zwischen der Sichtabdeckung **117** und dem Randteil **111** vorhanden ist. Die in den Armen **105.1** bis **105.5** gebildeten Hohlräume gehen über in den Freiraum **119** bzw. sie bilden gleichsam einen Teil desselben.

Gemäss einer besonders bevorzugten Ausführungsform kann auch der nach unten offene Freiraum **119** mit einem Bodenelement **120** wie es in **Figur 9** gezeigt ist verschlossen werden. Zu diesem Zweck sind z.B. in jedem Arm **105.1** bis **105.5** je zwei Rippen **121.1, 121.2** bzw. **121.3, 121.4** etc. ausgebildet, zwischen welchen ein z.B. zapfenförmiges Befestigungselement **122.1** bzw. **122.2** etc. festgeklemmt werden kann. Das genannte Befestigungselement **122.1** bzw. **122.2** etc. ist am Bodenelement **120** an entsprechender Stelle ausgebildet.

Das Bodenelement **120** ist in der Draufsicht ein Ring mit einer zentralen Öffnung **123**, deren Durchmesser dem Aussendurchmesser der Sichtabdeckung **117** entspricht. An der Aussenseite des Rings sind **105** flügelartige Flächenteile **124.1** bis **124.5** ausgebildet, welche die Arme **105.1** bis **105.5** nach unten abdecken bzw. verschliessen können. An jedem dieser Flächenteile **124.1** bis **124.5** ist ein Befestigungselement **122.1** bis **122.5** vorhanden.

Bei der Montage wird wie folgt vorgegangen: Zunächst wird auf die Unterseite des Drehgriff-Körpers **101** das Bodenelement **120** fixiert. Die Befestigungselemente **122.1** bis **122.5** rasten dabei zwischen den entsprechenden Rippen **121.1/121.1** bis **121.9/121.10** ein. Danach wird der Drehgriff-Körper **101** auf das Antriebselement **103** aufgesetzt, wobei der vierkantige Durchgangskanal **109** mit dem Vierkant-Abschnitt **106** in Eingriff kommt. Zuletzt wird das Tellerelement **102** auf den Kopf **108** aufgesetzt, wobei gleichzeitig der Drehgriff-Körper **101** auf dem Antriebselement **103** fixiert wird.

Grundsätzlich kann das Handrad jede geeignete Form haben. Es können weniger, aber auch mehr als fünf Arme bzw. Griffelemente vorgesehen sein. Das auswechselbare plattenförmige Element kann ähnlich wie das in **Figur 9** gezeigte Bodenelement sternförmig sein, so dass auch die Arme teilweise abgedeckt sind. Denkbar ist weiter, dass nicht der Drehgriff-Körper, sondern das platten- bzw. tellerförmige Element verdrehgesichert auf dem Antriebselement befestigt ist, und dass das genannte Element und der Drehgriff-Körper ihrerseits verdrehsicher verbunden sind. Auf diese Weise ist ebenfalls eine Drehmomentübertragung vom Drehgriff-Körper auf das Antriebselement möglich.

Sofern das Tellerelement **102** keine Befestigungsfunktion für den Drehgriff-Körper wahrnimmt, ist es nicht zwingend erforderlich das Gehäuse mit dem Antriebselement nach unten zeigend zu montiert und das in **Figur 9** gezeigte (oder ein sinngemässes) Bodenelement zu verwenden.

Das plattenförmige Element braucht auch nicht als zentral platzierter Teller ausgebildet zu sein. Es kann auch eine exzentrisch angeordnete Platte oder sogar ein peripher gelagertes Schild sein. Es ist typischerweise farblich anders gestaltet als der Drehgriff-Körper, so dass es ins Auge sticht. Zur Kennzeichnung kann es ferner mit einer Beschriftung oder einer Prägung versehen sein. Vorzugsweise wird die für die Mediumskennzeichnung übliche Farbcodierung (grün/blau/rot) verwendet.

In der **Figur 7** ist eine einzige Eingriffsöffnung gezeigt. Häufig wird eine solche Öffnung auch genügen, um den erwünschten Effekt zu erzielen, um also den Deckel wieder zu entfernen. Es kann aber auch von Vorteil sein, wenn mehrere Eingriffsöffnungen oder Ausnehmungen vorgesehen sind. Es kann auch eine Art Wipphebel vorgesehen sein, der von aussen betätigbar ist, wie ein Druckknopf und der den Deckel nach oben vom Drehgriff-Körper wegdrückt.

Das Tellerelement kann z.B. auch in der Art eines Bajonett-Verschlusses an dem Antriebselement befestigbar sein. Das heisst, es kann ein einrastender Drehverschluss zwischen Tellerelement und Kopf vorgesehen sein. Ein solcher Bajonett-Verschluss stellt eine rastende Verbindung her und ist auch zur Befestigung des Tellerelements am Drehgriff-Körper denkbar.

Eine drehfeste Verbindung zwischen dem Drehgriff und dem Antriebselement kann natürlich auch auf andere Weise als mit einem Vierkant geschaffen werden. Neben Mehrkantformen mit z.B. fünf, sechs oder mehr Kanten sind auch ovale Formen möglich. Es können auch kreiszylindrische Formen mit einer Rippe bzw. Nase oder einer Rille bzw. Vertiefung verwendet werden.

Anstelle des Handrads kann auch eine Verstelleinheit (z.B. ein Elektromotor) für ein gesteuertes Verstellen des Spindelventils einrastend angeschlossen, d.h. aufgeschnappt werden.

Das stabförmige Teil **13** (Spindeleinheit) wird man vorzugsweise aus Edelstahl herstellen. Edelstahl weist eine ausgezeichnete Korrosionsfestigkeit auf, hat jedoch den Nachteil schwer bearbeitbar zu sein. Man kann deshalb auch Messing und Rotguss verwenden, welche man in vorteilhafter Weise jedoch veredeln sollte, um eine gut Korrosionsbeständigkeit zu erhalten. Zur Veredelung kann ein Vernickeln oder Verchromen sowie auch eine zusätzliche Beschichtung mit einer Zinn-Kobalt-Legierung vorgenommen werden.

Das stabförmige Teil **13** (Spindeleinheit) und das Aussenteil **11** können auch aus demselben Material bestehen, müssen es aber nicht. Analoges gilt für eine eventuelle Beschichtung. Die Materialien wird man einmal nach Kostengründen bei der Herstellung und bei deren Beanspruchung im Betrieb auswählen.

Auch das Antriebselement **74** und das Gehäuse **71** können aus den obengenannten Materialien bestehen.

## Patentansprüche

1. Führungsvorrichtung für eine verdrehgesicherte Längsführung mit einem in einem rohrartigen Innenraum **(15)** eines Aussenteils **(11),** in dessen Längsrichtung geführt bewegbaren stabförmigen Teil (13), der mantelseitig einen durch einen Durchbruch (26) eines Dichtelements **(25)** fluiddicht geführten zylindrischen Abschnitt **(17)** hat, wobei ein erster Innenwandbereich des Innenraums **(15)** einen Führungsabschnitt **(20)** aufweist und ein zweiter Innenwandbereich einen Aufnahmeraum **(27)** für das Dichtelement **(25)** bildet, **dadurch gekennzeichnet, dass** der stabförmige Teil **(13)** mantelseitig einen Mehrkantstababschnitt **(19)** mit einem vieleckigen Querschnitt hat und der Führungsabschnitt **(20)** im ersten Innenwandbereich des Innenraums einen einem zylindrischen Formteil **(21)** entsprechenden wie auch einen einem Mehrkantformteil **(23)** entsprechenden überlagerten Formteil **(20)** hat und dass der zylindrische Formteil **(21)** des überlagerten Formteils im ersten Innenwandbereich des Innenraums eine Innenbohrung **(41)** mit einen Radius entsprechend rs + Δ ist, wobei rs ein Radius des Querschnitts des zylindrischen Abschnitts **(17)** und Δ eine Spieltoleranz ist.

2. Führungsvorrichtung nach Anspruch 1, **dadurch gekennzeichnet, dass** in einer Wand der Innenbohrung (41) Nuten (43) mit einem Abstand entsprechend R + Δ von einer Achse (16) des Aussenteils (11) vorhanden sind, wobei R einen Radius eines den Querschnitt des Mehrkantstababschnittes (19) umhüllenden Kreises (39) und Δ eine Spieltoleranz ist.

3. Führungsvorrichtung nach einem der Ansprüche 1 bis 2, **dadurch gekennzeichnet, dass** der Aufnahmeraum (27) für das Dichtelement (25) an einem Ende (31) des Führungsabschnitts (20) angeordnet ist, und vorzugsweise der Aufnahmeraum (27) am Ende (31) des Führungsabschnitts (20) eine radiale Anlagefläche (32) für das Dichtelement (25) sowie eine um eine Einpresstoleranz verkleinerte axiale Ausdehnung (t) entsprechend der Dicke des Dichtelements (25) hat und die axiale Ausdehnung durch einen koaxialen Halteansatz (35) begrenzt ist.

4. Führungsvorrichtung nach einem der Ansprüche 1 bis 3, **dadurch gekennzeichnet, dass** der Mehrkantabschnitt als regelmässiger Mehrkantabschnitt **(19)** ausgebildet ist und der Radius **(rs)** des zylindrischen Querschnitts des zylindrischen Stababschnitts **(17)** kleiner als ein Radius **R** eines den Querschnitt des Mehrkantabschnitts **(19)** umhüllenden Kreises **(39)** und grösser als R · cos (180°/n) ist, wobei n die Anzahl Ecken **(40)** der Mehrkantform ist.

5. Führungsvorrichtung nach Anspruch 4, **dadurch gekennzeichnet, dass** der Mehrkantabschnitt (19) ein Sechskant ist.

6. Führungsvorrichtung nach einem der Ansprüche 1 bis 5, **dadurch gekennzeichnet, dass** das stabförmige Teil **(13)** eine koaxial verlaufende Innengewindebohrung **(45)** hat, in die ein Antriebselement **(74)** zur Längsverschiebung eingreifen kann.

7. Führungsvorrichtung nach einem der Ansprüche 1 bis 6, **dadurch gekennzeichnet, dass** das stabförmige Teil **(13)** und/oder das Aussenteil **(11)** im Wesentlichen aus Edelstahl, insbesondere aus Messing, vorzugsweise aus Rotguss besteht, wobei die beiden letztgenannten Materialien in bevorzugter Weise vernickelt oder verchromt oder insbesondere mit einer Zinn-Kobalt-Legierungsbeschichtung versehen sind.

8. Ventileinsatz **(69)** für eine Armatur **(67)** umfassend eine in Längsrichtung verschiebbare Spindeleinheit **(13)** und ein Aussenteil **(11), dadurch gekennzeichnet, dass** eine Führungsvorrichtung nach einem der Ansprüche 1 bis 7 vorgesehen ist, wobei der bewegbare stabförmige Teil **(13)** die Spindeleinheit bildet und ein Verschlusselement **(47)** hat, mit dem wenigstens ein Fluiddurchlass **(81)** aufgrund der Bewegung der Spindeleinheit **(13)** wenigstens teilweise verschliessbar ist.

9. Ventileinsatz (69) nach Anspruch 8, **dadurch gekennzeichnet, dass** das Dichtelement (25) eine an einem Ende (31) des Führungsabschnitts (20) angeordnete Spindelabdichtung (Lippendichtung, Doppellippendichtung, Ringdichtung, ...) zur fluiddichten Abdichtung des zylindrischen Abschnitts (17) ist, wobei vorzugsweise ein Aufnahmeraum (27) für die Abdichtung (25) vorhanden ist, der am Ende (31) des Führungsabschnitts (20) eine radiale Anlagefläche (32) für die Abdichtung (25) hat, wobei der Aufnahmeraum (27) eine um eine Einpresstoleranz verkleinerte axiale Ausdehnung (t) entsprechend der Abdichtungsdicke hat und die axiale Ausdehnung (t) durch einen koaxialen Halteansatz (35) begrenzt ist, wobei insbesondere das Verschlusselement (47) und die Abdichtung (25) derart angeordnet sind, dass durch eine Verschiebung in Längsrichtung der Spindeleinheit (13) in eine Endstellung das Verschlusselement (47) und die Abdichtung (25) totraumfrei aufeinander liegen.

10. Ventileinsatz **(69)** nach Anspruch 8 oder 9, **dadurch gekennzeichnet, dass** der Mehrkantabschnitt als regelmässiger Mehrkantabschnitt **(19)** ausgebildet ist und der Radius **(rₛ)** des zylindrischen Querschnitts des zylindrischen Stababschnitts **(17)** kleiner als ein Radius **(R)** eines den Querschnitt des Mehrkantabschnitts **(19)** umhüllenden Kreises **(39)** und grösser als R · cos (180°/n) ist, wobei n die Anzahl Ecken **(40)** der Mehrkantform ist.

11. Ventileinsatz **(69)** nach einem der Ansprüche 8 bis 10, **dadurch gekennzeichnet, dass** das Aussenteil **(11)** ein Halteelement **(55)** und die Spindeleinheit **(13)** eine koaxial verlaufende Bohrung **(45)** mit einem Innengewinde **(46)** aufweist, in die einen ersten Aussengewindeabschnitt **(75)** tragendes, im Halteelement **(79)** gehaltenes Antriebselement **(74)** zur Längsverschiebung eingreifen kann, und vorzugsweise das Antriebselement **(74)** einen zweiten Aussengewindeabschnitt **(76)** und das Halteelement **(79)** ein Innengewinde **(77)** hat, wobei das Innengewinde **(46)** der Innenbohrung **(45)** mit dem ersten Aussengewindeabschnitt **(75)** und das Innengewinde **(77)** des Halteelements **(79)** mit dem zweiten Aussengewindeabschnitt **(76)** der Antriebseinheit **(74)** miteinander kämmen.

12. Spindelventil **(67)** als Armatur mit einem einen Fluideinlass **(83)** und einen Fluidauslass **(84)** aufweisenden Gehäuse **(71)**, **dadurch gekennzeichnet, dass** ein Ventileinsatz nach einem der Ansprüche 8 bis 11 vorgesehen ist, wobei durch das Verschlusselement **(47)** wenigstens ein mit dem Fluideinlass **(83)** und dem Fluidauslass **(84)** in Verbindung stehender Fluiddurchlass **(81)** im Gehäuse **(71)** aufgrund der Bewegung der Spindeleinheit **(13)** wenigstens teilweise verschliessbar ist.

13. Spindelventil **(67)** nach Anspruch 12, **gekennzeichnet durch** eine im Gehäuse **(71)** angeordnete, fluiddicht abgedichtete Einsetzöffnung **(70),** welche gegenüber dem Fluiddurchlass **(81)** derart angeordnet ist, dass die Achse des Fluiddurchlasses **(78)** und die Längsachse **(16)** der Spindeleinheit **(13)** als Längsachse des Ventileinsatzes miteinander fluchten.

## Claims

1. Guiding device for a longitudinal guidance locked against rotation, having a rod-form element (13) movable in a tubular internal space (15) of an outer component (11) and guided in the longitudinal direction thereof, the element (13) having on its outer surface a cylindrical portion (17) guided in a manner impervious to fluids through an opening (26) of a sealing element (25), wherein a first internal wall region of the internal space (15) comprises a guide portion (20) and a second internal wall region forms a receiving space (27) for the sealing element (25), **characterised in that** on its outer surface the rod-form element (13) has a multi-edged rod portion (19) of polygonal cross-section and the guide portion (20) in the first internal wall region of the internal space has a shaped part (20) corresponding to a cylindrical shaped part (21) and also a superimposed shaped part (20) corresponding to a multi-edged shaped part (23), and **in that** the cylindrical shaped part (21) of the superimposed shaped part in the first internal wall region of the internal space is an internal bore (41) having a radius corresponding to rs + Δ, rs being a radius of the cross-section of the cylindrical portion (17)and Δ being a clearance tolerance.

2. Guiding device according to claim 1, **characterised in that** in a wall of the internal bore (41) there are grooves (3) having a spacing corresponding to R + Δ from an axis (16) of the outer component (11), R being a radius of a circle (39) enclosing the cross-section of the multi-edged rod portion (19) and Δ being a clearance tolerance.

3. Guiding device according to one of claims 1 and 2, **characterised in that** the receiving space (27) for the sealing element (25) is arranged at one end (31) of the guide portion (20), and preferably the receiving space (27) at the end (31) of the guide portion (20) has a radial bearing surface (32) for the sealing element (25) as well as an axial extent (t) reduced by a press fit tolerance corresponding to the thickness of the sealing element (25) and the axial extent is limited by a coaxial retaining flange (35).

4. Guiding device according to any one of claims 1 to 3, **characterised in that** the multi-edged portion is in the form of a regular multi-edged portion (19) and the radius (rs) of the cylindrical cross-section of the cylindrical rod portion (17) is smaller than a radius R of a circle (39) enclosing the cross-section of the multi-edged portion (19) and larger than R · cos (180°/n), where n is the number of corners (40) of the multi-edged shape.

5. Guiding device according to claim 4, **characterised in that** the multi-edged portion (19) is a hexagon.

6. Guiding device according to any one of claims 1 to 5, **characterised in that** the rod-form element (13) has a coaxially extending internally threaded bore (45), in which a driving element (74) is able to engage for longitudinal displacement.

7. Guiding device according to any one of claims 1 to 6, **characterised in that** the rod-form element (13) and/or the outer component (11) consists substantially of stainless steel, in particular of brass, preferably of gunmetal, the two last-mentioned materials preferably being nickel-plated or chrome-plated or in particular provided with a tin-cobalt alloy coating.

8. Valve insert (69) for a fitting (67) comprising a spindle unit (13) displaceable in the longitudinal direction and an outer component (11), **characterised in that** a guiding device according to any one of claims 1 to 7 is provided, the movable rod-form element (13) forming the spindle unit and having a closure element (47) with which at least one fluid aperture (81) is at least partially closable as a result of the movement of the spindle unit (13).

9. Valve insert (69) according to claim 8, **characterised in that** the sealing element (25) is a spindle seal (lip seal, double lip seal, annular seal, ...) arranged at one end (31) of the guide portion (20) for sealing the cylindrical portion (17) in a manner impervious to fluids, wherein preferably a receiving space (27) for the seal (25) is present, which receiving space at the end (31) of the guide portion (20) has a radial bearing surface (32) for the seal (25), wherein the receiving space (27) has an axial extent (t) reduced by a press fit tolerance corresponding to the seal thickness and the axial extent (t) is limited by a coaxial retaining flange (35), wherein in particular the closure element (47) and the seal (25) are arranged such that by displacement of the spindle unit (13) in the longitudinal direction into an end position the closure element (47) and the seal (25) lie on top of one another with no dead space.

10. Valve insert (69) according to claim 8 or 9, **characterised in that** the multi-edged portion is in the form of a regular multi-edged portion (19) and the radius (rₛ) of the cylindrical cross-section of the cylindrical rod portion (17) is smaller than a radius (R) of a circle (39) enclosing the cross-section of the multi-edged portion (19) and larger than R · cos (180°/n), where n is the number of corners (40) of the multi-edged shape.

11. Valve insert (69) according to any one of claims 8 to 10, **characterised in that** the outer component (11) comprises a retaining element (55) and the spindle unit (13) comprises a coaxially extending bore (45) with an internal thread (46) in which a drive element (74) bearing a first externally threaded portion (75) and retained in the retaining element (79) is able to engage for longitudinal displacement, and preferably the drive element (74) has a second externally threaded portion (76) and the retaining element (79) has an internal thread (77), wherein the internal thread (46) of the inner bore (45) meshes with the first externally threaded portion (75) and the internal thread (77) of the retaining element (79) meshes with the second externally threaded portion (76) of the drive unit (74).

12. Spindle valve (67) as a fitting having a housing (71) comprising a fluid inlet (83) and a fluid outlet (84), **characterised in that** a valve insert according to any one of claims 8 to 11 is provided, wherein at least one fluid aperture (81) in the housing (71) communicating with the fluid inlet (83) and the fluid outlet (84) is at least partially closable by the closure element (47) as a result of the movement of the spindle unit (13).

13. Spindle valve (67) according to claim 12, **characterised by** an insertion opening (70) arranged in the housing (71) and sealed in a manner impervious to fluid, which insertion opening is arranged opposite the fluid opening (81) in such a way that the axis (78) of the fluid opening and the longitudinal axis (16) of the spindle unit (13) are aligned with one another as the longitudinal axis of the valve insert.

## Revendications

1. Dispositif de guidage pour un guide longitudinal anti-torsion comportant un élément en forme de barre (13) mobile, guidé dans un espace intérieur tubulaire (15) d'un élément extérieur (11) dans le sens longitudinal de ce dernier, et qui présente côté extérieur un segment cylindrique (17) guidé de manière étanche aux fluides à travers une ouverture (26) d'un élément d'étanchéité (25)' une première zone de paroi intérieure de l'espace intérieur (15) présentant un segment de guidage (20) et une deuxième zone de paroi intérieure formant un espace de logement (27) pour l'élément d'étanchéité (25) **caractérisé en ce que** l'élément en forme de barre (13) présente, du côté extérieur, un segment de barre polygonal (19) de section transversale à plusieurs angles, et **en ce que** le segment de guidage (20) présente, dans la première zone de paroi intérieure de l'espace intérieur, une pièce façonnée superposée (20) correspondant à une pièce façonnée cylindrique (21) et correspondant également à une pièce façonnée polygonale (23).

2. Dispositif de guidage selon la revendication 1, **caractérisé en ce que** l'espace de logement (27) de l'élément d'étanchéité (25) est disposé à une extrémité (31) du segment de guidage (20)' et **en ce que** l'espace de logement (27) à l'extrémité (31) du segment de guidage (20) présente de préférence une surface d'appui radiale (32) pour l'élément d'étanchéité (25) ainsi qu'un allongement axial (t) réduit selon une tolérance d'injection correspondant à l'épaisseur de l'élément d'étanchéité (25) et **en ce que** l'allongement axial est délimité par un rebord de retenue coaxial (35).

3. Dispositif de guidage selon la revendication 1 ou 2, **caractérisé en ce que** le segment polygonal est conçu sous la forme d'un segment polygonal régulier (19) et **en ce que** le rayon (rₛ) de la section transversale cylindrique du segment de barre cylindrique (17) est plus petit qu'un rayon R d'un cercle (39) enveloppant la section transversale du segment polygonal (19) et plus grand que R.cos(180°/n), n étant le nombre d'angles (40) de la forme polygonale.

4. Dispositif de guidage selon une des revendications 1 à 3, **caractérisé en ce que** l'élément en forme de barre (13) présente un alésage à filetage intérieur (45) passant dans le sens coaxial, dans lequel peut s'engager un élément d'actionnement (74) du déplacement longitudinal.

5. Dispositif de guidage selon une des revendications 1 à 4, **caractérisé en ce que** l'élément en forme de barre (13) et/ou l'élément extérieur (11) est constitué essentiellement d'acier spécial, en particulier de laiton, de préférence de laiton rouge, les deux derniers matériaux cités étant de préférence nickelés ou chromés, ou en particulier munis d'un revêtement en alliage zinc-cobalt.

6. Insert de vanne (69) destiné à une robinetterie (67) comprenant une unité de tige (13) mobile dans le sens longitudinal et un élément extérieur (11) **caractérisé en ce qu'**est prévu un dispositif de guidage selon une des revendications 1 à 5, l'élément mobile en forme de barre (13) formant l'unité de tige et présentant un élément de fermeture (47) avec lequel au moins un passage de fluide (81) peut être au moins partiellement fermé en raison du mouvement de l'unité de tige (13).

7. Insert de vanne selon la revendication 6, **caractérisé en ce que** l'élément d'étanchéité (25) est un joint d'étanchéité de tige (joint à lèvre, joint à double lèvre, joint annulaire, ...) disposé à une extrémité (31) du segment de guidage (20) pour l'étanchéité hermétique aux fluides du segment de barre cylindrique (17) moyennant quoi il existe de préférence un espace de logement (27) de l'élément d'étanchéité (25) qui présente à l'extrémité (31) du segment de guidage (20) une surface d'appui radiale (32) pour l'élément d'étanchéité (25)' l'espace de logement (27) présentant un allongement axial (t) réduit selon une tolérance d'injection correspondant à l'épaisseur de l'étanchéité, et l'allongement axial (t) étant limité par un rebord de retenue coaxial (35)' l'élément de fermeture (47) et l'étanchéité (25) étant en particulier disposés de telle manière que sous l'effet d'un déplacement de l'unité de tige (13) dans le sens longitudinal, l'élément de fermeture (47) et l'étanchéité (25) se trouvent en position de fin de course l'un sur l'autre sans espace mort.

8. insert de vanne (69) selon la revendication 6 ou 7, **caractérisé en ce que** le segment polygonal est conçu sous la forme d'un segment polygonal régulier (19) et **en ce que** le rayon (rₛ) de la section transversale cylindrique du segment de barre cylindrique (17) est plus petit qu'un rayon R d'un cercle (39) enveloppant la section transversale du segment polygonal (19) et plus grand que R.cos(180°/n), n étant le nombre d'angles (40) de la forme polygonale.

9. Insert de vanne (69) selon une des revendications 6 à 8, 10 **caractérisé en ce que** l'élément extérieur (11) présente un élément de retenue (55) et l'unité de tige (13) un alésage coaxial (45) comportant un filetage intérieur (46) dans lequel peut s'engager un élément d'actionnement (74) du déplacement longitudinal portant un premier segment à filetage extérieur (75)' retenu dans l'élément de retenue (79) et **en ce que** l'élément d'actionnement (74) présente de préférence un deuxième segment à filetage extérieur (76) et l'élément de retenue (79) un filetage intérieur (77) le filetage intérieur (46) de l'alésage intérieur (45) s'engrenant avec le premier segment à filetage extérieur (75) et le filetage intérieur (77) de l'élément de retenue (79) s'engrenant avec le deuxième segment à filetage extérieur (76) de l'unité d'actionnement (74).

10. Vanne à tige (67) en tant que système de robinetterie, comportant un carter (71) présentant une entrée de fluide (83) et une sortie de fluide (84), **caractérisé en ce qu'**est prévu un insert de vanne selon une des revendications 6 à 9, au moins un passage de fluide (81) dans le carter (71) en communication avec l'entrée de fluide (83) et la sortie de fluide (84) pouvant être au moins en partie fermé par l'élément de fermeture (47) sous l'effet du déplacement de l'unité de tige (13).

11. Vanne à tige (67) selon la revendication 10, **caractérisée par** une ouverture d'insertion (70) disposée dans le carter (71) de manière hermétiquement étanche aux fluides, qui est disposée par rapport au passage de fluide (81) de telle manière que l'axe du passage de fluide (78) et l'axe longitudinal (16) de l'unité de broche (13) sont alignés l'un sur l'autre pour former l'axe longitudinal du insert de vanne.

12. Unité de tige convenant pour un insert de vanne selon la revendication 6, **caractérisée en ce qu'**elle est conçue sous la forme d'un élément en forme de barre (13) qui présente côté extérieur un segment cylindrique (17) pour être guidée de manière étanche aux fluides à travers une ouverture (26) d'un élément d'étanchéité (25) et qui présente en outre côté extérieur un segment de barre polygonal (19) de section transversale à plusieurs angles, pour être guidée dans un espace intérieur tubulaire (15) d'un élément extérieur (11) dans le sens longitudinal.

13. Elément extérieur (11) pour un insert de vanne selon la revendication 6, l'élément extérieur présentant un espace intérieur tubulaire (15) pour un élément en forme de barre à guider dans le sens longitudinal, l'espace intérieur (15) présentant une première zone de paroi intérieure comportant un segment de guidage (20) et une deuxième zone de paroi intérieure comportant un espace de logement (27) d'un élément d'étanchéité (25) pour le guidage étanche aux fluides de l'élément en forme de barre, **caractérisé en ce que** le segment de guidage (20) présente dans la première zone de paroi intérieure de l'espace intérieur une pièce façonnée (20) qui correspond à une superposition d'une pièce façonnée cylindrique (21) et d'une pièce façonnée polygonale (23) présentant une section transversale à plusieurs angles.
